# EUROPEAN PATENT APPLICATION

(11) **EP 1 070 659 A2**
(43) Date of publication of application: **24.01.2001**
(21) Application number: 00115397.2
(22) Date of filing: 17.07.2000
(51) Int. Cl.: B62K 25/08

(54) **Connecting apparatus for bicycle or motorcycle fork and method**

(30) Priority: 20.07.1999 IT BO990405
(71) Applicant: Marzocchi S.p.A., 40069 Lavino di Zola Predosa (Bologna) (IT)
(72) Inventor: Vignocchi, Loris, 40069 Zola Predosa,(Bologna) (IT); Musiani, Sandro, 40043 Marzabotto, (Bologna) (IT)
(74) Representative: Porsia, Dino, Dr.

(57) **Abstract**

The pieces to be reciprocally connected are mechanically manufactured with tolerances such that the outer diameter of the ends of the tubes (6, 6 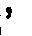 ) is suitably greater than the inner diameter of the seats of the ends of the crowns (1). The crowns are heated to a temperature which does not cause a permanent deformation in the pieces and which is such as to slightly increase the diameter of their seats. The tubes instead are inserted by their ends to be connected, in a liquid nitrogen bath that suitably restricts the outer diameter of said ends and brings them substantially to a condition of equality or inferiority with respect to the diameter of the dilated seats of the ends of the crowns. The cooled ends of the tubes are then inserted into the heated end of the seats of the crowns and when the pieces return to room temperature, they are connected with the predetermined tightness.

## Description

The invention relates to the front forks for bicycles or motorcycles, in particular the telescopic forks for the so-called mountain bikes or off road bicycles, or off-road motorcycles, which are typically used bumpy terrain and/or steep uphill or downhill slopes. Particularly the invention relates to those telescopic forks equipped with an upper cross member or crown with a seat in the center into which the end of steerer tube is connected, and is provided at the ends with seats into which there are connected the ends of tubes or blades parallel and opposite to the steerer tube and intended to slide telescopically in outer sliding tubes secured by their bottom end with the wheel hub, inside each telescopic unit there being provided elastic means which normally maintain the same unit in an extended position, shock absorbing systems being provided.

For the connection of said tubes to the crown, different methods are currently being used which are however, difficult to automate, are not quickly carried out, and do not lead to results of a good level of technological reliability. To solve the technical problems of the known prior art in the specific aforesaid area, the invention proposes a method which includes:
- a mechanical working phase of the pieces to be reciprocally connected, with tolerances such that the outer diameter of the end of the tubes is suitably greater than the inner diameter of the seats of the ends of the crown;
- a heating phase of the crown, at a temperature so as to not create permanent deformations, and sufficient to slightly increase the inner diameter of the seats of the ends of the crown itself;
- a cooling phase, at a proper temperature, of the ends of the tubes to be connected into the seats of the ends of the crown, by inserting said ends of the tubes into a bath of liquid nitrogen, in such a manner as to properly decrease their outer diameter;
- quick and facilitated insertion of the cooled and radially contracted ends of the tubes into the radially dilated seats of the heated crown, without the inconveniences in this phase of the pressure connection, since the tubes enter into the seats with or without a slight interference. When the crown and the tubes return to room temperature, said parts remain fixed and connected with the predetermined tightening.

The apparatus for carrying out the said method comprises:
- a feed station for the tubes and for the crowns, where the first ones are placed vertically, with a pre-set relative position and are oriented downwardly with the end to be connected towards the crown, while the crowns themselves are placed horizontally;
- at least one robot arm equipped at its end with a couple of closing self-centring pliers, to grasp a pair of tubes by their upper end and equipped with at least and expanding self-centring pliers for clamping the crowns by their central seat, intended to support the steering column;
- a possible station equipped with the means to check the diameters of the seats of the ends of the crowns and to check the external diameter of the tube ends, immediately after these components have been extracted from the feed station;
- a furnace in which said robot arm cyclically inserts a crown taken from the feed station and extracts one heated at the proper temperature;
- a tank to store liquid nitrogen, open at the top to insert the ends of the tubes;
- an assembly station, equipped with means to horizontally support an upside down turned crown taken from the heating oven, equipped with means to support corresponding cooled tubes vertically above the end seats of said crown, equipped with means to properly align and center the tubes themselves and with means for inserting the end of the tubes into the end seats of the crown;
- a collection and removal station for the crowns with the tubes mounted thereon.

Further features of the invention, and the advantages deriving therefrom, will appear evident from the following description of a preferred embodiment of same, shown by way of non-limiting example in the figures of the attached seven sheets of drawings, in which:
- figure 1 illustrates in perspective a fork of the type referred to;
- figure 2 is a schematic and plan view from above said apparatus;
- figure 3 is a view in a lateral elevation of the robot arm during the cooperation with the loading and unloading station of the pieces to be assembled and of the assembled pieces;
- figures 4 and 5 illustrate in perspective the pliers provided at the end of the robot arm;
- figures 6, 7 and 8 illustrate in perspective and in different stages of assembly, the parts of the station relative to the inspection of the internal diameters of the crown seats, prior to the introduction of these last into the heating furnace;
- figure 9 illustrates in perspective the part of the station relative to the inspection of the external diameter of the lower ends of the tubes;

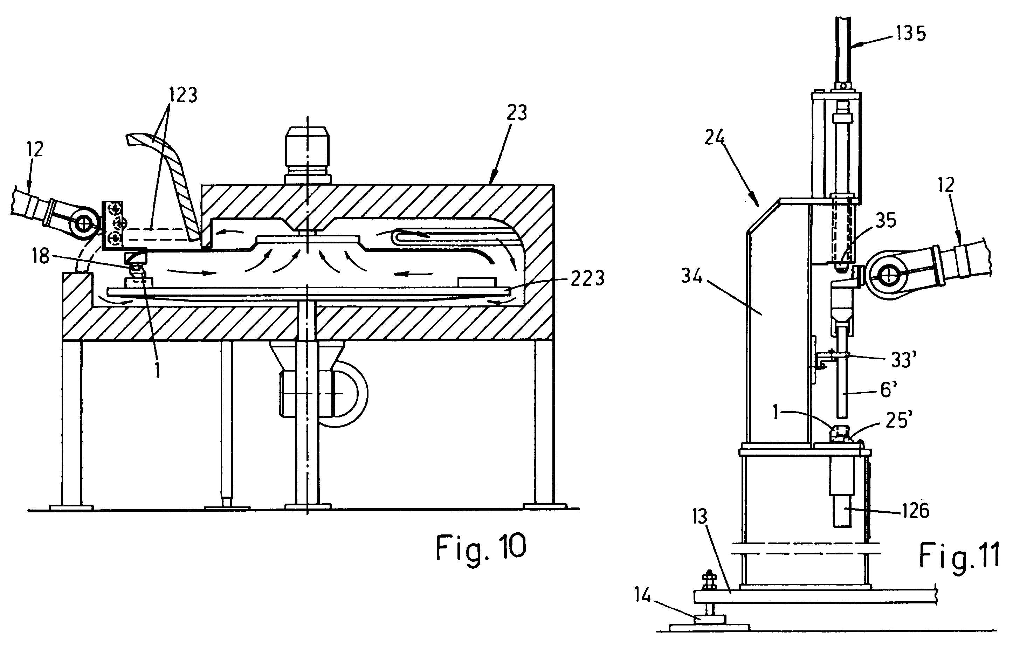

- figure 10 illustrates laterally and with parts in cross section, the heating oven for the crowns, during the phase of co-operation with the robot arm;
- figure 11 illustrates in lateral elevation the assembly station of the tubes in the crown seats, during the phase in which the tubes themselves will be positioned by the robot arm in this station;
- figure 12 illustrates in perspective other details of the station in figure 11;
- figure 13 illustrates the cross section of the seat at an end of a crown, at the end of the assembly phase of this into the corresponding end of a tube;
- figure 14 illustrates laterally and with parts in cross section, the cooling station for the ends of the tubes to be connected in the corresponding end seats of a crown.

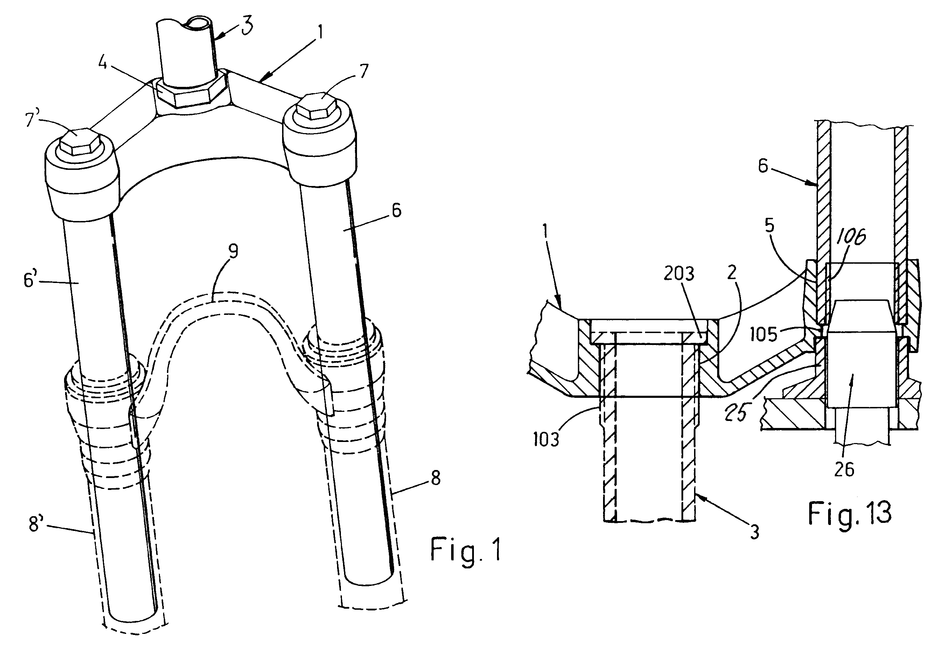

From Figures 1 and 13 it is noted that the fork to which reference is made comprises a crown 1 having a usually ribbed shape, for example with inverted U - section, provided at its center with a round section seat 2, with a step profile, with a diameter increasing towards its bottom, inside which there is inserted the enlarged and threaded end 103, provided with abutment head 203, of the tube 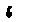 3 of the steerer which is thereafter axially locked by means of a ring nut 4. The crown 1 is provided at its end with seats 5 - 5 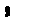 which are parallel to the central seat 2, inside which there must be mounted and blocked with the required tightening the ends of cylindrical round section tubes 6, 6 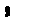 which abut against an annular projection 5 concentrically provided in the said seats at a short distance from their upper end. The ends of the tubes inserted into the seats 5 are fore example threaded at their interior, as indicated by reference numeral 106, so that closure plugs 7, 7 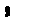 may be screwed into same. The tubes 6, 6 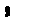 are intended to telescopically co-operate with outer sliding tubes 8, 8 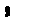 which are usually interconnected at their upper ends by means of an anti-twisting cross member 9, said outer sliding tubes being closed at their bottom and secured to the ends of the hub of the front wheel of the bicycle, while in the telescopic units 6, 8 and 6 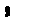 , 8 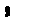 there are provided elastic means which maintain said units normally extended, shock absorbing means being also provided.

It is to be noted that the pieces to be connected by using the process and apparatus according to the invention, i.e. the seats 5, 5' of the ends of the crown 1 and the ends of the tubes or blades 6, 6' are subjected to any suitable working phase (machining for example) in order that they are prepared and obtained with tolerances such that the outer diameter of the end of the tubes is suitably greater than the inner diameter of the seats of the ends of the crown.

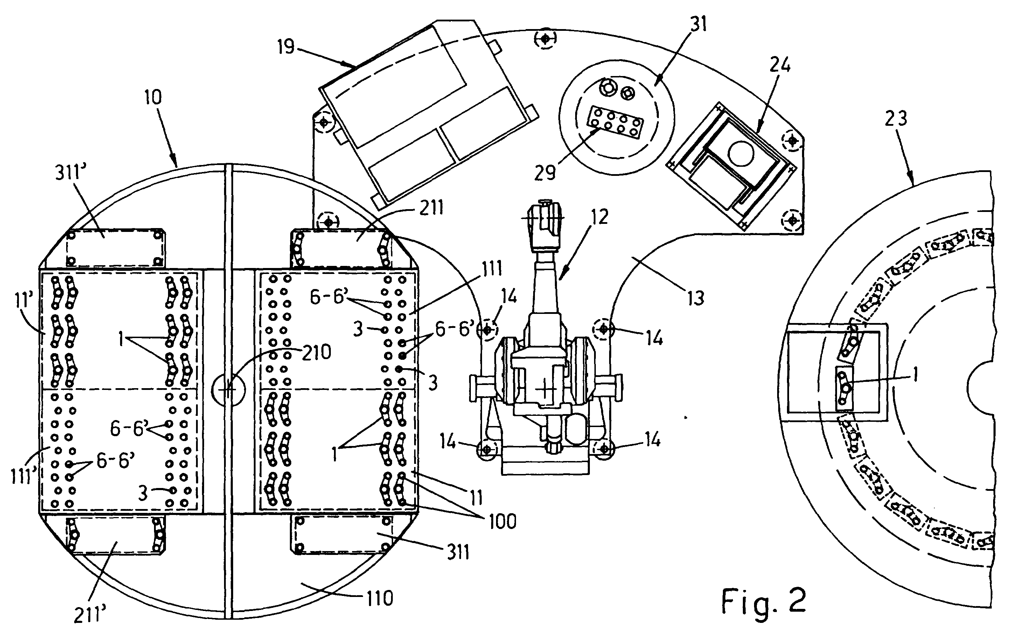

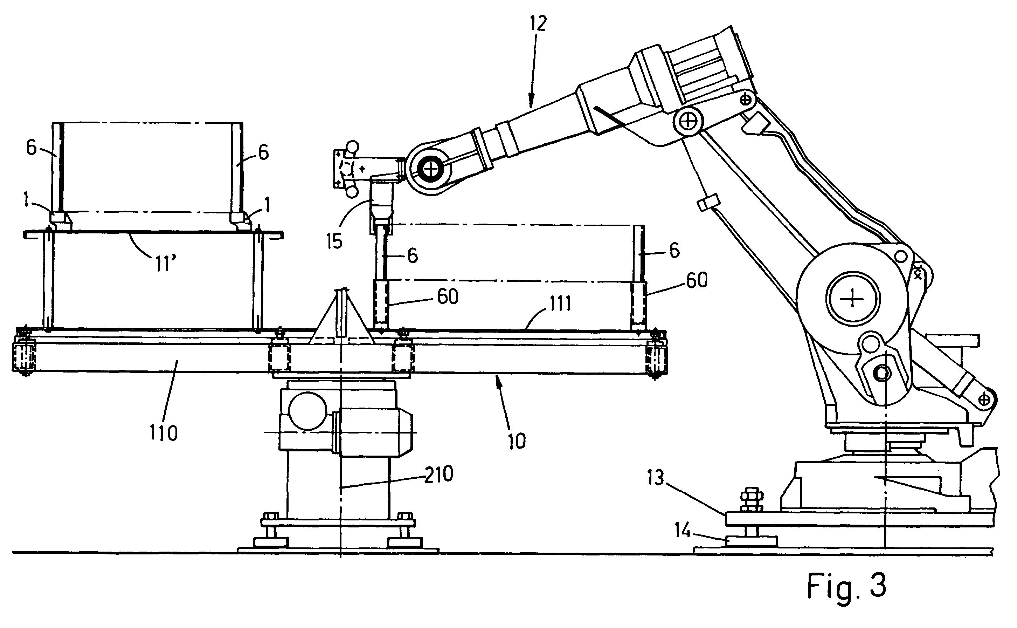

With reference to Figure 2 it is noted that the apparatus according to the invention comprises a station 10 provided with a horizontal table 110 which upon command can be rotated of 180° about its vertical axis 210 and which is provided on diametrically opposite positions of couple of horizontal trays 11, 111 and 11', 111' placed side by side, of which the trays 11, 11 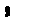 are provided with aligned rows of vertical pins 100 which engage the end seats 5, 5 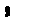 of the crowns 1 which are turned upside down with respect to the position of use, arranged horizontally and aligned on several rows. The trays 111, 111 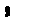 are instead with rows of vertical tubes 60 (Figure 3) inside which there are inserted the tubes or blades 6, 6 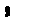 and if the case also the above mentioned steerer tubes 3 (see further). In the example of Figure 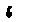 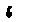 , the trays 11, 111 are in the loading phase of the apparatus, while the trays 11 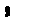 , 111 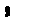 are in the phase of unloading of the pieces assembled in a preceding work cycle and of refilling with pieces to be assembled subsequently, for example by an operator. Laterally to the trays, on their outer side, there are provided small supplementary trays , also horizontally arranged, 211, 311 and 211 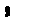 , 311 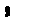 , adapted to receive the pieces discarded of the crowns and of the tubes (blades) which have not passed the size inspection (see further) said supplementary trays being placed in an order which contemplates those intended for the tubes next to the main trays for the crowns and those intended for the crowns next to the main trays for the tubes.

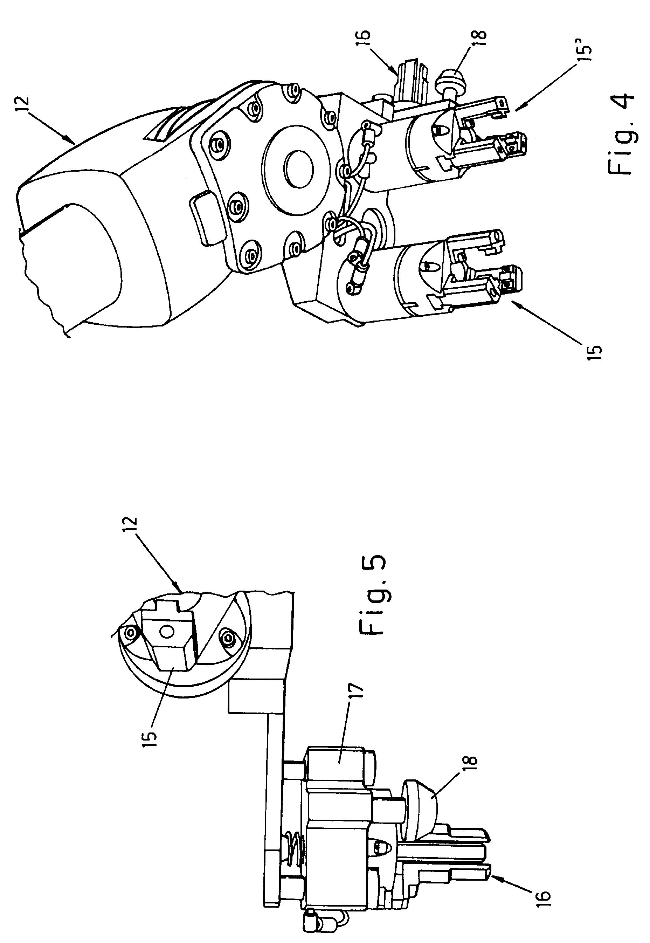

From Figure 2 it is noted that the trays 11,111 are oriented towards a robot arm 12 having a composite motion, arranged on a platform 13 secured to the ground in a stable manner by its feet 14 , said arm being controlled by a programmable processor, not shown, and said arm being provided at its end with a pair of closing self-centring pliers 15, 15' as shown in Figure 4, and arranged at 90° with respect to same it carries a self-centring expanding pliers 16, as shown in Figures 4 and 5, arranged on a spring suspension platform 17, together with a conical plug 18. Cyclically the arm 12 directs vertically downwards the pliers 15, 15' and arranges same above tray 111 for taking a pair of tubes 6, 6', or it directs vertically downwards the pliers 16 and the plug 18 so as to arrange same above tray 11 in such a manner as to insert the pliers 16 inside the central seat 2 of a crown and to engage, by means of the plug 18, one of the end seats 5, 5' of the said crown, which in this manner cannot rotate with respect to the pliers and it remains in a stable pre-arranged position.

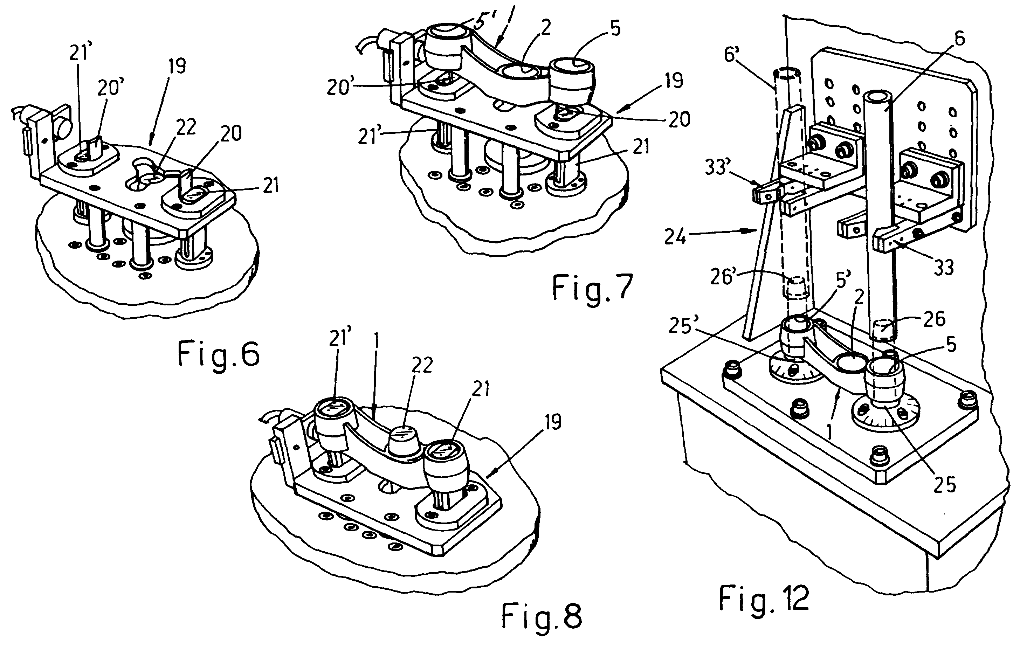

The crown taken from tray 11 is positioned by the arm 12 in a control station 19 arranged laterally with respect to station 10 and better shown in Figure 6. The station 19 comprises a pair of vertical appendices 20, 20' which engage the lower portion of the end seats 5, 5' of the crown and bear onto the inner projections 105 of said seats (Figure 13) as shown in Figure 7. According to a sequence, as shown in Figure 8, into the end seats 5, 5' and into the intermediate seat 2 of the crown there are lifted and inserted feelers of known type 21, 21' and 22 which detect and measure the diameter of the said crown seats and in case that the measurements fall within the prescribed tolerances, the crown itself is again is taken again by the unit 16, 18 of the arm 12 and it is transferred to the subsequent working phase, while, if the detected measurements are not correct, the said crown is deposited by arm 12 into the discard tray 211.

The subsequent working station into which there are inserted and arranged horizontally the crown 1 consists of a rotary furnace with a vertical axis 23 (Figure 2) which is provided with a port 123 which in correct phase relationship is opened and is closed and which carries onto its rotary table 223 a concentric crown of supports which are equivalent to those of the trays 11, 11', for horizontally supporting the overturned crowns 1, one following the other and tangentially arranged with respect to the orbit of rotation. Inside the furnace, the crowns are heated, for example electrically, to a temperature comprised between 50° and 110° has the function of widening or expanding the diameter of the seats of the said crowns of a predetermined amount. When the plant is started, the arm 12 fills completely the furnace 23 with crowns 1, thereafter it takes one crown heated to the above mentioned temperature value and inserts same into an assembly station 24 arranged onto the platform 13 and better evidenced in Figures 11, 12 and 13, where it is noted that the said overturned crown is positioned with its end seats 5, 5' onto bushings 25, 25' onto which the said seats bear with their inner projections 105. From the top ends of the bushings 25, 25' there project outwardly the cones 26, 26', which are normally in their retracted position shown by full line in Figure 13, and which serve as centring means not only for the crowns but also for the tubes, as it will be explained further, said cones being connected to suitable axial driving means 126.

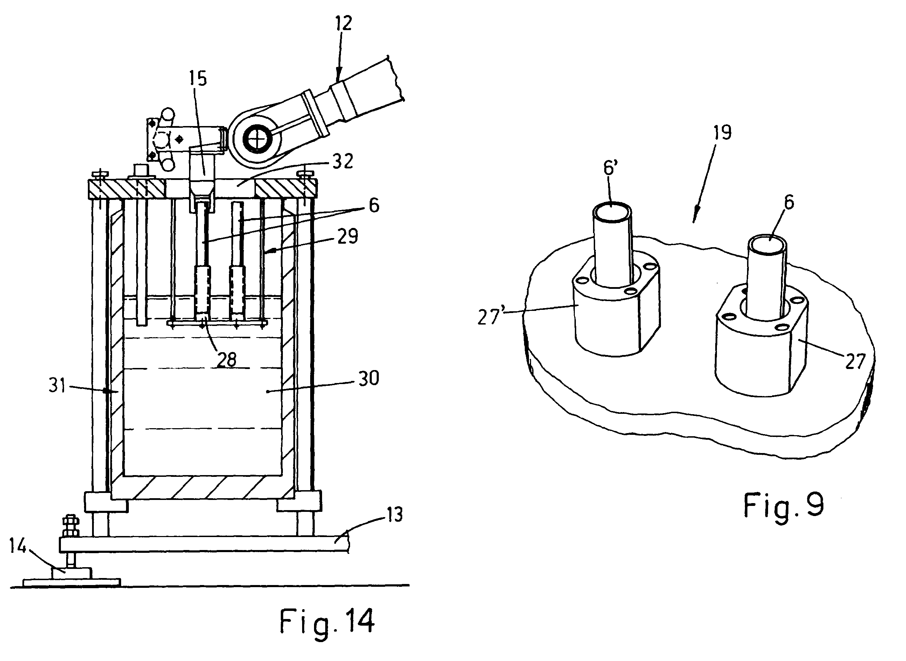

In a subsequent working phase, the robot arm 12 directs the pliers 15,15' in downward direction and by means of same it tales from the tray 111 by their upper ends a pair of tubes 6, 6' and inserts same into the seats 27,27' of the control station 19 (see Figures 2 and 9) where knot means, not shown, control the outer diameter of the lower end of said tubes. If the tubes do not present a diameter suitable for their use, they are deposited inside the discard tray 311, while if the diameter of the said tubes is suitable (Figures 2, 14), the arm 12 inserts the lower ends of said pair of tubes inside the tubular and vertical supports 28 of a basket 29 which is immersed in a liquid nitrogen bath 30 contained in a storage tank 31 secured on platform 13 and provided with an upper opening 32. To the tank 31 there are associated all control and safety means required by the case. After having deposited a pair of tubes inside the basket 29, the robot arm 12 takes out form the said basket a pair of tubes which were deposited during a preceding cycle and inserts the intermediate portion of said tunes between the spring jaws of corresponding fixed horizontal pliers 33, 33' (Figures 2, 11, 12) carried by a column 34 of the station 24, located above the bushings 25, 25' and such to align the tubes 6, 6' with said bushings. While the tubes are still kept by their upper ends by the pliers 15, 15', the lower cones 26, 26' (Figure 13) are lifted through the end seats of crown 1 and are inserted inside the lower end of the said tubes (Figure 12) which in this manner are subjected to a first alignment action with the said seats of the of the crown 1. In rapid succession of phase the pliers 15, 15' of the robot arm abandon the pipes 6, 6' which are steadily kept by the intermediate and fixed pliers 33, 33' and there takes place the intervention of a battery of pushers35 which are lowered by respective actuators 135 and which engage through their conical head, the upper end of the tubes and cause these latter to be inserted by their lower end into the end seats 5, 5' of the crown 1, as illustrated in Figure 13, while the centring cones 26, 26' are lowered by reaction. It appear evident that in the phase of connection, the tubes are maintained in the perfecto condition of verticality and of alignment with the end seats of the crown, by the co-operation with the conical seats of the lower centring means 26, 26' and of the battery of upper pushers 35.

Due to the cooling effect determined by the liquid nitrogen, the lower ends of the tubes 6, 6' enter easily and rapidly into the heated seats of the ends of the crown, avoiding structural deformities and all the inconveniences of pressure connection. The manufacturing tolerance of the pieces and the double thermal treatment of cooling and heating of the pieces themselves are such that when the coupled pieces return to room temperature, they will turn out to be connected to each other with the predetermined tightening. Aside from the advantage deriving from the lack of deformations in connected parts, it is evident how the connecting procedure is carried out in a shorter time and how it can be automatically carried out, with the highest safety and reliability.

A few seconds immediately after the coupling, the tubes 6, 6 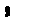 are sufficiently fastened in the crown seats and the pliers 15, 15 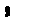 of the robot arm can take up the tubes themselves by their upper end and may transport the set of assembled pieces on tray 11 of station 10.

The station 10 and assembly station 24, may be arranged to allow the automatic assembly of the tube 3 of the steering mechanism which may be contained in certain seats of tray 111 and which may be manipulated by one of the pliers 15, 15 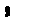 . The steerer tube 3 will be mounted in the appropriate seat 2 of the crown, simply with pressure, without having a prior cooling in liquid nitrogen. The assembly will be effected by suitable means associated with the battery of pushers 35.

Upon completion of the assembly of all the pieces placed in trays 11 and 111, station 10 rotates 180° degrees to place the robot arm 12 in relation to the trays 11 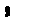 , 111 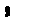 with new pieces to assemble, while trays 11, 111 are placed on the side of the operator who will arrange to unload and reload them with new pieces.

It remains understood that the description refers to a preferred embodiment of the invention, with the omission of the construction details relative to the methods of inspection and safety necessary to the programming and automatic function of the apparatus, inasmuch as they are easily conceivable by those skilled in the art. It is also understood that numerous variations and modifications can be brought, which can for example refer to the elimination of the inspection station 19 in the case in which the pieces are subject to size check prior to being loaded in the station 10.

## Claims

1. A process for connecting and securing to the upper cross piece or crown (1) of a fork of bicycles or motorcycles, at least the blades or tubes (6, 6 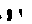 ) forming the telescopic legs of the fork itself, characterised by the succession of the following operatives phases:
- a mechanical working phase of the pieces to be reciprocally connected, with tolerances such that the outer diameter of the end of the tubes is suitably greater than the inner diameter of the seats of the ends of the crown;
- a heating phase of the crown, at a temperature so as to not create permanent deformations, and sufficient to slightly increase the inner diameter of the seats of the ends of the crown itself;
- a cooling phase, at a proper temperature, of the ends of the tubes to be connected into the seats of the ends of the crown, by inserting said ends of the tubes into a bath of liquid nitrogen, in such a manner as to properly decrease their outer diameter;
- insertion of the cooled and radially contracted ends of the tubes (6, 6 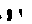 ) into the radially dilated seats (5, 5 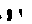 ) of the heated crown, with or without a slight interference between the parts and in a manner that when they return to room temperature, said parts remain fixed and connected with the predetermined tightening.

2. A process according to claim 1), characterised by the fact that the crown (1) is uniformly heated at a temperature included between 50 and 110 degrees C.

3. Apparatus to connect to the crown of a fork for bicycles or motorcycles, the blades or tubes forming the telescopic legs of the fork itself, particularly for carrying out the process according to the preceding claims, characterised by comprising:
- a feed station (10) for the tubes (6, 6 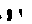 ) and for the crowns (1), where the first ones are placed vertically, with a pre-set relative position and are oriented downwardly with the end to be connected towards the crown, while the crowns themselves are placed horizontally and are upside down with respect to the position in which they will be used;
- at least one robot arm (12) equipped at its end with a couple of closing self-centring pliers (15, 15 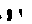 ), to grasp a pair of tubes (6, 6 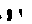 ) by their upper end and equipped with at least and expanding self-centring pliers (16) for clamping the crowns by their central seat (2), intended to support the steering column (3);
- a possible station (19) equipped with the means to check the diameters of the seats of the ends (5, 5 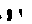 ) of the crowns (1) and to check the external diameter of the tube ends, immediately after these components have been extracted from the feed station (10);
- a furnace (23) in which said robot arm (12) cyclically inserts a crown taken from the feed station and extracts one heated at the proper temperature;
- a tank (30) to store liquid nitrogen, open at the top to allow said robot arm to cyclically insert and extract a pair of tubes (6, 6 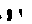 ) which touch the liquid nitrogen with their bottom end;
- an assembly station (24), equipped with means to horizontally support an upside down turned crown (1) taken from the heating oven, equipped with means (33, 33 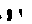 ) to support a pair of cooled tubes (6, 6 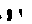 ) vertically above the end seats of said crown, equipped with means (26, 26 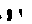 , 35) to properly align and center the tubes themselves with the end seats of the crown and equipped, finally, with means (35, 135) for inserting the cooled end of the tubes into the heated end seats of the crown;
- a collection and removal station for the crowns mounted on the tubes.

4. Apparatus according to claim 3), in which the feeding station (10) for the tubes and the crowns includes a table (110) which turns cyclically 180 degrees around its own vertical axis (210) and on which trays (11, 111, 11 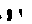 , 111 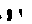 ) are mounted horizontally and in opposed positions, arranged for the orderly support of the crowns and of the tubes which are inverted in relation to their final use, the whole in such a manner so that while a pair of trays is in a position to cooperate with the manipulating arm (12), the other pair of trays is in a position to unload the assembled pieces and reload with new pieces to assemble.

5. Apparatus according to claim 4), in which the trays (11, 11 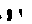 ) adapted to support the crowns (1) are equipped with pairs of vertical pins (100) in which the end seats (5, 5 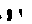 ) of the upside down turned crowns are inserted which remain free with their central seat (2), adapted to be grasped by the robot arm (12), said crowns being aligned in various parallel rows properly spaced.

6. Apparatus according to claim 4), characterized by the fact that the trays (111, 111 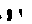 ) to support the tubes (6, 6 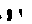 ) are equipped with vertical and tubular seats (60) in which said tubes are lodged with a portion of their lower end and are placed vertically, since said seats are aligned in various rows and properly spaced among themselves.

7. Apparatus according to claim 4), characterized by the fact that additional trays (211, 311, 211 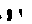 , 311 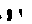 ) are placed laterally to the trays (11, 111, 11 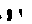 , 111 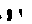 ) of the feed station (10) for the crowns and the tubes, to collect the crowns and tubes which turn out to be defective upon control of the dimensions at the appropriate inspection station (19).

8. Apparatus according to claim 4), chraracterized by the fact that the crowns with the tubes assembled, are placed for unloading on the same feeding tray (11, 11 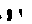 ).

9. Apparatus according to claim 3), in which the manipulating arm (12) carries at an end a parallel pair of closing self-centring pliers (15, 15 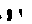 ), placed between them at the same distance between the tubes (6, 6 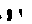 ) placed on the loading tray (111, 111 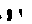 ), said pliers being placed to grasp the end of the respective pair of tubes, in a condition of axial alignment with said pliers.

10. Apparatus according to claim 9), characterized by the fact that the manipulating arm (12) carries at its end, with an orientation of 90 degrees with respect to the pliers (15, 15 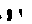 )to grasp the tubes, an expanding self-centring pliers (16) placed on a spring platform (17), together with a parallel and conical plug (18), there being provided that said pliers cyclically grasps a crown by its central seat (2), while said plug engages one of the end seats (5, 5 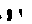 ) of the same crown avoiding undesired rotational movements around said pliers.

11. Apparatus according to claim 3), in which inspection station (19) includes a pair of vertical appendices (20, 20 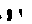 ) which engage the lower part of the end seat (5, 5 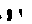 ) of the overturned crown, inserted in said station by the robot arm (12), there being provided feelers (21, 21 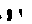 , 22) which in correct phase engage the crown seats to check their relative diameter.

12. Apparatus according to claim 3), in which the inspection station (19) includes a pair of vertical and parallel seats (27, 27 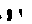 ) in which the robot arm (12) inserts the bottom end of the tubes (6, 6 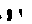 ) taken from the suitable loading tray, these seats being equipped with means to check the outer diameter of said lower ends of the tubes.

13. Apparatus according to claim 3), characterized by the fact that the furnace (23) for heating the crowns (1) is of rotary type with a vertical axis and, for example, is heated electrically, is equipped with a door (123) which open and closes cyclically in accordance with the operation of the robot arm (12) and carries a crown of vertical pins on its turntable (223) in order to support the crowns substantially in the same way in which they are supported by the respective loading tray (11, 11 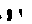 ).

14. Apparatus according to claim 3), characterized by the fact that the storage tank (31) of liquid nitrogen (30) is equipped with an upper opening (32) beneath which a basket (29) is placed with a plurality of tubular supports (28) partially immersed in the nitrogen and into which the lower ends of the tubes (6, 6 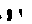 ) are inserted by the robot arm (12).

15. Apparatus according to claim 3), characterized by comprising means which, each time that the manipulating arm inserts a crown into the heating oven (23), immediately afterwards it extracts a heated one and transfers it to the assembly station (24.)

16. Apparatus according to claim 3), characterized by comprising means which, each time the manipulating arm inserts a pair of tubes (6, 6 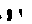 ) in the basket (29) of the liquid nitrogen storage tank, immediately afterwards it extracts a pair of cooled tubes from the basket itself and transfers them to the assembly station (24).

17. Apparatus according to claim 3), characterized by the fact that the assembly station (24) includes a pair of vertical bushings (25, 25 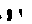 ) onto which the end seats (5, 5 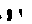 ) of a heated and overturned crown (1) are placed by their inner protrusions.

18. Apparatus according to claim 17), characterized by the fact that the assembly station (24) includes, above said bushings (25, 25 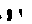 ) and in alignment with these, a pair of fixed horizontal pliers (33, 33 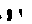 ) between the spring jaws of which the robot arm (12) cyclically inserts the middle part of a pair of tubes whose lower parts have been cooled.

19. Apparatus according to claim 18), characterized by the fact that in the bushings (25, 25 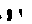 ) of the assembly station (24) there are provided, axially movable by suitable actuators, cones (26, 26 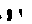 ) which in proper phase are raised through the end seats of the heated crown, to cooperate with centring function with the lower and cooled ends of the pair of tubes (6, 6 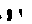 ) inserted by the robot arm in the fixed pliers (33, 33 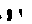 ) of said station, before the arm itself abandons said tubes.

20. Apparatus according to claim 19), characterized by the fact that in the assembly station (24) a battery of vertical pushers (35, 135) is provided above the fixed pliers (33, 33 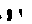 ) for holding the cooled tubes (6, 6 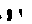 ), which with their conical lower end cooperate in proper phase also acting as centring means, with the upper ends of the tubes left free from the pliers (15, 15 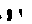 ) of the robot arm, said battery of pushers being cyclically lowered with a stroke of such amplitude as to insert the lower end of the tubes in the end seats of the crown, after which the same battery of pushers returns to the raised rest position.

21. Apparatus according to the preceding claims, characterised by the fact of comprising means to ensure that upon the completion of the assembly of the tubes in the end seats of the crown, the assembled tubes and crowns are taken again by the pliers (15, 15 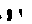 ) of the robot arm (2) and transferred into the empty seats of the crown feeding tray (11, 11 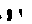 ).

22. Apparatus according to the preceding claims, characterized by the fact of being capable to be predisposed to pressure mount the steering column (3), in the central seat (2) of the upside down turned crowns (1).

23. Apparatus according to the preceding claims, characterized by the fact the robot arm (12), the inspection station (19), the storage tank (31) for the liquid nitrogen and the assembly station (24), are placed on a common platform (13) which is firmly secured to the ground by means of suitable feet (14).
